# EUROPÄISCHE PATENTSCHRIFT

(11) **EP 2 645 076 B1**
(45) Veröffentlichungstag und Bekanntmachung des Hinweises auf die Patenterteilung: **08.02.2017**
(21) Anmeldenummer: 12161734.4
(22) Anmeldetag: 28.03.2012
(51) Int. Cl.: G01M 7/08, G01M 3/26

(54) **Verfahren und Vorrichtung zum Testen eines flächigen Bauelements bezüglich Beständigkeit gegenüber Druckeinwirkung**
Method and device for testing a laminar construction element for resistance to pressure
Procédé et dispositif de test d'un élément de construction plat relatif à la résistance à la pression

(43) Veröffentlichungstag der Anmeldung: 02.10.2013
(73) Patentinhaber: Sälzer GmbH, 35037 Marburg (DE)
(72) Erfinder: Sälzer, Heinrich, 35037 Marburg (DE)
(74) Vertreter: Bauer, Dirk

(56) Entgegenhaltungen:
- WO-A1-2011/104126
- DD-A1- 151 810
- DE-A1- 4 107 093
- DE-C1- 3 516 908
- US-A- 2 659 235
- US-A- 3 248 924
- US-A- 4 967 602
- US-A- 5 197 323

## Beschreibung

### Einleitung

Die Erfindung betrifft ein Verfahren zum Testen eines flächigen Bauelements bezüglich Beständigkeit gegenüber Explosionsdruck oder Erdbebeneinwirkung zum Simulieren von Stoßwellen mit geringem Impuls mit den folgenden Verfahrensschritten:
a) Das Bauelement wird in kraftübertragender, druckdichter Weise in einem Halterahmen eingebaut.
b) Der mit dem Bauelement versehene Halterahmen wird so an einer Wand montiert, dass zwischen Rahmenschenkeln des Halterahmens, dem Bauelement und der Wand eine gegenüber der Umgebung druckdicht abgeschlossene Druckkammer gebildet wird.
c) Mindestens ein Druckbehälter wird mit einem kompressiblen Fluid gefüllt, bis in dem Druckbehälter ein Druck p_{B} herrscht, der größer als ein Umgebungsdruck p_{U} ist.
d) Mindestens ein Absperrelement einer Absperreinrichtung wird von einer Sperrstellung in eine Öffnungsstellung überführt, wodurch ein freier Verbindungsquerschnitt von dem Druckbehälter zu der Druckkammer geschaffen wird.
e) Die Überführung des Absperrelements der Absperreinrichtung von der Schließstellung in die Öffnungsstellung erfolgt zerstörungsfrei und reversibel, wobei die Absperreinrichtung in mindestens einer Verbindungsleitung zwischen der Druckkammer und dem Druckbehälter angeordnet ist.

Des Weiteren betrifft die vorliegende Erfindung eine Vorrichtung, mit der das vorbeschriebene Verfahren durchgeführt werden kann.

Als flächige Bauelemente werden im Sinne der vorliegenden Anmeldung sämtliche Bauelemente verstanden, die zur Einhausung von Räumen herangezogen werden können. Beispielsweise zählen zu flächigen Bauelementen Türen, Tore und Fenster jeglicher Art sowie Fassaden-, Wand-, oder Dachkonstruktionen sowie Teile davon.

### Stand der Technik

Aus dem Stand der Technik sind insbesondere zwei Verfahren zum Testen des Widerstandes gegen Explosionsdruck bekannt, mittels der die geprüften Bauteile in Widerstandsklassen eingeordnet werden können. Das erste, sehr kostspielige und aufwändige Verfahren ist der so genannte Freilandversuch, bei dem das zu testende Bauteil auf einem geeigneten Gelände aufgestellt wird und eine Druckbelastung durch Detonation einer bestimmten Menge eines Sprengstoffs in einem bestimmten Abstand zu dem Bauteil hervorgerufen wird. In der DIN EN 13123-2 werden die Anforderungen sowie die Klassifizierung von EXR 1 bis EXR5 und in der DIN EN 13124-2 wird das Prüfverfahren als solches geregelt. Derartige Freilandversuche können jedoch aufgrund des erheblichen Lärms und eines nicht unerheblichen Sicherheitsrisikos für das Umfeld lediglich an bestimmten Orten, wie beispielsweise auf Truppenübungsplätzen o.ä., ausgeführt werden und sind darüber hinaus nicht bei allen Witterungsbedingungen durchführbar.

Das zweite übliche Prüfverfahren ist der Explosionsdruck-Versuch am Stoßrohr, dessen Prüfablauf in der DIN EN 13124-1 geregelt ist. Die Klassifizierung der geprüften Körper wird in der DIN EN 13123-1 festgelegt. Für den Versuch wird ein etwa 50 m langes Rohr mit einem Durchmesser von etwa 2 m bis 3 m mittels eines über dem Durchmesser eingespannten Stahlblechs in zwei Bereiche unterteilt, wobei in dem dem Prüfkörper abgewandten Bereich des Stoßrohres, der als Druckrohr bezeichnet wird, ein Druck aufgebaut wird, während in dem dem Prüfkörper zugewandten Bereich des Stoßrohres Umgebungsdruck vorliegt. Das die beiden Bereiche unterteilende Stahlblech ist mit einer Sprengladung (z.B. X-förmige Sprengschnur) versehen, die nach ausreichendem Druckaufbau in dem Druckrohr gezündet wird, so dass durch die Sprengung das Stahlblech zerstört und dadurch ein Verbindungsquerschnitt von dem Druckrohr zu dem dem Bauelement zugeordneten Rohrabschnitt geschaffen wird. Infolgedessen bewegt sich eine Druckwelle mit großer Geschwindigkeit durch das Stoßrohr auf das zu prüfende Bauelement und trifft dieses schlagartig.

Zwar erfolgt die Detonation des Sprengstoffs beim Stoßrohr-Versuch innerhalb des Stoßrohres und somit in einem gegenüber dem Umfeld abgeschlossenen Bereich, jedoch ist der Versuchsaufbau sehr aufwändig und erfordert aufgrund der Abmessungen des Stoßrohres einen großen Platzbedarf. Das hohe Gewicht der einzelnen Stoßrohrkomponenten erfordert darüber hinaus entsprechende technische Hilfsmittel bei dem jeweiligen Einbau des Stahlblechs, was die Handhabung des Versuchsaufbaus weiter erschwert. Ein weiterer Nachteil des Stoßrohr-Versuchs besteht darin, dass lediglich Bauteile mit einem Durchmesser beziehungsweise Kantenmaß kleiner als ca. 2 m geprüft werden können. Darüber hinaus ist das Stahlblech nach jedem Versuch zu ersetzen. Schließlich sind auch beim Stoßrohr-Versuch kaum vorbestimmte klimatische Bedingungen mit geringen Toleranzen einhaltbar, da in der Regel der Prüfkörper durch die große Länge des Stoßrohres außen im Freien vor dem Stoßrohr montiert wird.

Um Eigenschaften von Bauteilen zu testen sind aus dem Stand der Technik zahlreiche Verfahren und Vorrichtungen bekannt, wobei gemäß der DE 41 07 093 A1 eine Rissprüfung eines Formteils und gemäß der US 4 967 602 A ein Test zur Reißfestigkeit bei der Papierherstellung durchgeführt wird.

Die Dokumente WO 2011/104126 A1, US 5 197 323 A und US 3 248 924 A befassen sich mit der Prüfung von Bauteilen gegenüber Explosionsdruck, wobei ein Sprengstoff zur Erzeugung des Drucks gezündet wird. Das Dokument US 2 659 235 beschäftigt sich mit der Entzündlichkeit von elektrischen Einrichtungen und das Dokument DE 35 16 908 C1 mit der Prüfung von Fugendurchlasskoeffizienten und Schlagregensicherheit.

Auch das Dokument DD 151 810 A1 befasst sich mit der Prüfung von Fugendurchlasskoeffizienten und Schlagregensicherheit, wobei das Verfahren sich ferner dadurch auszeichnen soll, Windböen zu simulieren.

### Aufgabe

Es ist nunmehr Aufgabe der vorliegenden Erfindung, ein Verfahren zur Durchführung eines Tests von flächigen Bauelementen hinsichtlich ihrer Beständigkeit gegenüber Explosionsdruck oder Erdbebeneinwirkung zum Simulieren von Stoßwellen mit geringem Impuls bereit zu stellen, das sich durch einen möglichst kostengünstigen und Platz sparenden Aufbau auszeichnet und darüber hinaus die Simulation von verschiedenartigen Druckbelastungen erlaubt. Analog soll diese Aufgabe auch an die erfindungsgemäße Vorrichtung gestellt werden.

### Lösung

Entsprechend der Erfindung wird die vorgenannte Aufgabe verfahrensmäßig dadurch gelöst, dass ein die Druckkammer mit der Umgebung verbindendes Entlastungsventil geöffnet wird, nachdem das Absperrelement der Absperreinrichtung in die Schließstellung überführt wurde.

Im Gegensatz zu der Absperreinrichtung im Stoßrohr-Verfahren, die aus einem Stahlblech besteht, das mittels einer daran angebrachten Sprengladung irreversibel zerstört wird und somit nach dem Versuch nicht mehr verwendbar ist, ist die Absperreinrichtung gemäß der vorliegenden Erfindung zerstörungsfrei und reversibel betätigbar, was bedeutet, dass sie nach Erzeugung der Druckbelastung nach unterschiedlichen Zeitspannen nach dem Öffnungszeitpunkt und gegebenenfalls unterschiedlich schnell oder langsam wieder geschlossen werden kann. Auf diese Weise können verschiedene Verläufe einer Druckbelastung (Spitzendruck, Druckgradienten, Belastungsdauer, etc.) simuliert werden. Auch entfällt ein Austausch der Absperreinrichtung nach Versuchende, so dass das erfindungsgemäße Verfahren nach dem Ausbau des getesteten Bauteils und dem Einbau eines neuen zu testenden Bauteils sofort wieder durchführbar ist, sobald der Druckbehälter wieder hinreichend gefüllt ist.

Die Absperreinrichtung befindet sich in einer Verbindungsleitung zwischen dem Druckbehälter und der Druckkammer, so dass sie beispielsweise als Ventil ausgebildet werden kann.

Unabhängig von der Ausführung der Absperreinrichtung wird bei dem vorliegenden Verfahren auf eine detonierende Sprengladung verzichtet; vielmehr wird der Explosionsdruck durch das Öffnen der Absperreinrichtung simuliert, durch das der in dem Druckbehälter erzeugte Druck plötzlich in die Druckkammer gelangt. Somit kann auf das Vorhalten von gefährlichem Sprengstoff gänzlich verzichtet werden.

Durch den Verzicht auf eine Sprengladung sowie die Abkehr von einem Stoßrohr mit sehr großer Länge ist es möglich, den erfindungsgemäßen Versuchsaufbau deutlich kompakter zu gestalten, da ein Mindestabstand zwischen dem als Stahlblech mit Sprengladung ausgebildeten Absperrelement zu dem Prüfkörper sowie zu dem gegenüberliegenden Ende des Druckrohres bei dem Absperrelement nicht mehr nötig ist. Somit kann die Länge des gesamten Versuchsaufbaus auf wenige Meter reduziert werden, wohingegen die Länge des Versuchsaufbaus bei dem Stoßrohrverfahren in der Regel bei 50 m liegt. Folglich kann das Verfahren durch die geringere Tiefenabmessung der Druckkammer witterungsunabhängig in geschützten und temperierten Räumlichkeiten durchgeführt werden. Darüber hinaus ist die Durchführung des Verfahrens nicht auf Bauteile mit einer bestimmten Größe beschränkt, vielmehr ist es sogar möglich, das Verfahren bei entsprechender Ausgestaltung des Versuchsaufbaus für Bauteile sowie ein dieses umgebendes Mauerwerk oder eine dieses umgebende Betonwand durchzuführen, so dass die Anschlusssituation an das Mauerwerk oder die Betonwand (Anker, Winkel oder andere Befestigungselemente) beziehungsweise das Mauerwerk oder die Betonwand selbst ebenfalls auf seine beziehungsweise ihre Druckbeständigkeit hin geprüft werden kann.

Dadurch dass ein die Druckkammer mit der Umgebung verbindendes Entlastungsventil geöffnet wird, nachdem das Absperrelement der Absperreinrichtung in die Schließstellung überführt wurde, kann erfindungsgemäß die Belastungszeit und damit der Impuls für das zu prüfende Bauteil begrenzt werden, so dass nur ein sehr kurzer Druckstoß simuliert werden kann.

Wenn das Absperrelement von der Öffnungsstellung in die Schließstellung überführt wird, bevor zwischen der Druckkammer und dem Druckbehälter ein Druckausgleich stattgefunden hat oder bevor der Druck in der Druckkammer wieder zu sinken beginnt, kann eine Stoßwelle mit geringem Impuls simuliert werden. Das Auftreten und die eventuelle Wirkung von Reflexionsvorgängen kann ebenfalls gezielt beeinflusst werden.

Dadurch, dass das Absperrelement im Anschluss an eine Schließbewegung wieder eine Öffnungsbewegung vollführt, vorzugsweise nachdem es zuvor in die Schließstellung überführt worden war, können die verschiedenartigsten Druckeinwirkungen über einen Belastungszeitraum simuliert werden.

Vorrichtungsgemäß wird die vorstehende Aufgabe durch eine Vorrichtung gemäß dem Oberbegriff des Anspruchs 4 gelöst, bei der die Druckkammer ein mit der Umgebung verbindendes Entlastungsventil besitzt, über das Druck in der Druckkammer teilweise oder gänzlich abgelassen wird, nachdem das Absperrelement der Absperreinrichtung in die Schließstellung überführt wurde. Mit Hilfe dieser Vorrichtung ist das zuvor beschriebene Verfahren auf besonders einfache Weise durchführbar, wobei die beschriebenen Vorteile bezüglich des Verfahrens analog auf die Vorrichtung zutreffen.

Im Gegensatz zu dem Stoßrohr, bei dem die Absperreinrichtung zwischen dem Druckrohr und dem eigentlichen Stoßrohr (Abschnitt, an dessen Ende sich der Prüfkörper befindet) angeordnet ist und somit mindestens den selben Querschnitt aufweisen muss wie das Stoßrohr, ist die Absperreinrichtung gemäß der vorliegenden Erfindung in der mindestens einen Verbindungsleitung zwischen dem Druckbehälter und der Druckkammer angeordnet und kann auf einfache Weise als Ventil oder ähnliches ausgebildet werden, wobei die Verbindungsleitung typischerweise einen Durchmesser geringer Größe besitzt.

Als Absperreinrichtung eignet sich beispielsweise eine Pneumatikarmatur, insbesondere ein Kugelhahn. Dabei ist es ferner vorteilhaft, wenn die Absperreinrichtung mit einem vorzugsweise pneumatischen Stellantrieb betätigbar ist.

Im Hinblick auf eine gewisse Flexibilität bei der Verlegung der Verbindungsleitung kann es vorteilhaft sein, wenn sie zumindest abschnittsweise von einem Schlauch gebildet ist, der selbstverständlich eine hinreichende Druckfestigkeit aufweisen muss.

Um einen schnelleren Druckanstieg in dem Druckbehälter und eine möglichst gleichmäßige Druckbeaufschlagung des Bauelements zu erreichen, ist es gemäß einer Weiterbildung der erfindungsgemäßen Vorrichtung vorgesehen, dass mehrere parallel zueinander verschaltete Verbindungsleitungen vorgesehen sind, die mit jeweils einer Absperreinrichtung versehen sind.

Da jedoch die Betätigung der Absperreinrichtungen verschiedener Verbindungsleitungen beim Versuchsablauf simultan betätigt werden müssen, kann es alternativ vorteilhaft sein, dass mehrere, parallel zueinander verschaltete und jeweils in die Druckkammer mündende Verbindungsleitungen mit einer gemeinsamen, von dem Druckbehälter ausgehenden Versorgungsleitung verbunden sind, in der die Absperreinrichtung abgeordnet ist. Mit einer einzigen Absperreinrichtung lassen sich also mehrere Teilleitungen versorgen, die an unterschiedlichen Stellen in die Druckkammer münden.

Im Falle mehrerer Verbindungsleitungen ist es vorteilhaft, wenn Mündungsquerschnitte der Verbindungsleitungen jeweils einen Abstand voneinander aufweisen, der mindestens 15 %, vorzugsweise mindestens 20 % eines größten Druckkammermaßes beträgt. Durch die Anordnung mehrerer Verbindungsleitungen zur Speisung der Druckkammer kann der für den durchzuführenden Versuch vorgesehene Druck schneller erreicht und gleichmäßiger über die Fläche des Prüfkörpers verteilt werden, als dies mit nur einer Verbindungsleitung der Fall wäre. Um eine möglichst gleichmäßige Druckverteilung in der Druckkammer zu erreichen, sollten die Mündungsquerschnitte den vorerwähnten Abstand zueinander besitzen.

Wie bereits in verfahrenstechnischer Sicht erwähnt, kann die erfindungsgemäße Vorrichtung sehr kompakt ausgeführt werden. Dabei ist es jedoch von Vorteil, wenn eine senkrecht zu der Wand gemessene Tiefe der Druckkammer mindestens 10 mm, vorzugsweise mindestens 30 mm, weiter vorzugsweise mindestens 60 mm, noch weiter vorzugsweise mindestens 120 mm pro m² Fläche einer parallel zu der Wand ausgerichteten Druckkammerfläche beträgt. Auch hierdurch wir eine Druckvergleichmäßigung über die Bauelement-Fläche erzielt, da seitliches Abströmen der eintretenden Luft von dem Mündungsquerschnitt erleichtert wird, da Strömungswiderstände sinken.

Vorteilhafterweise sollte der Querschnitt der Verbindungsleitung oder die Summe der Querschnitte der Verbindungsleitungen kleiner als 20 %, vorzugsweise kleiner als 15 %, weiter vorzugsweise kleiner als 10 %, noch weiter vorzugsweise kleiner als 5 %, noch weiter vorzugsweise kleiner als 3 % einer parallel zu der Wand ausgerichteten Fläche der Druckkammer sein. Ein insgesamt großer Strömungsquerschnitt vermindert zwar die Druckverluste, da die Reibung geringer ist, doch besitzen kleinere Querschnitte den Vorteil, dass die verwendbaren Absperreinrichtungen kostengünstig und leicht verfügbar sind.

Dabei kann die Wand aus einer der Druckkammer zugewandten Platte und diese auf ihrer der Druckkammer abgewandten Seite verstärkenden und mit der Platte verbundenen Profile zusammengesetzt sein, die einen lichten Abstand zueinander von maximal 200 mm, vorzugsweise maximal 100 mm, aufweisen.

Eine besonders einfache und stabile Konstruktion erhält man, wenn die Rahmenschenkel des Halterahmens aus einem als Rechteck-, U- oder Doppel-T-Profil ausgebildeten Grundprofil und einem auf der der Druckkammer abgewandten Seite angeordneten, vorzugsweise als Flachprofil ausgebildeten Einspannprofil zusammengesetzt ist, wobei das Einspannprofil vorzugsweise über das Grundprofil in Richtung einer durch den Halterahmen definierten Öffnung vorsteht und das Bauelement abstützt.

Gemäß einer Ausgestaltung der erfindungsgemäßen Vorrichtung sind zwei Druckbehälter vorgesehen, die über jeweils eine zugeordnete Absperreinrichtung entweder gleichzeitig oder zeitlich versetzt zur Druckbeaufschlagung der Druckkammer dienen. Hierdurch können mehrere gleiche oder unterschiedliche Spitzendrücke in gleichen oder unterschiedlichen Zeitabläufen simuliert werden.

Die Länge der mindestens einen Verbindungsleitung sollte vorteilhafterweise zwischen 1 m und 10 m, vorzugsweise zwischen 2 m und 5 m betragen, wobei der Vorteil eines geringen Druckverlusts bei einer kurzen Länge der Verbindungsleitung dem Nachteil einer geringen Flexibilität bezüglich der Lage der Druckkammer zu dem Druckbehälter bei einer kurzen Verbindungsleitung entgegensteht, so dass ein gewisser Interessenkonflikt beachtet werden muss.

### Ausführungsbeispiel

Besonders deutlich wird die Erfindung anhand der nachfolgenden Ausführungsbeispiele zu jeweils einer erfindungsgemäßen Vorrichtung.

Es zeigt
- Fig. 1:: einen Vertikalschnitt durch eine Druckkammer einer ersten erfindungsgemäßen Vorrichtung,
- Fig. 2:: eine Ansicht einer Wand der Druckkammer gemäß Figur 1,
- Fig. 3:: einen Horizontalschnitt durch die Druckkammer gemäß Figur 1,
- Fig. 4:: einen Horizontalschnitt durch eine alternative Druckkammer mit Mauerteil und
- Fig. 5:: einen schematischen Druckluft-Schaltplan der Vorrichtung gemäß den Figuren 1 bis 4.

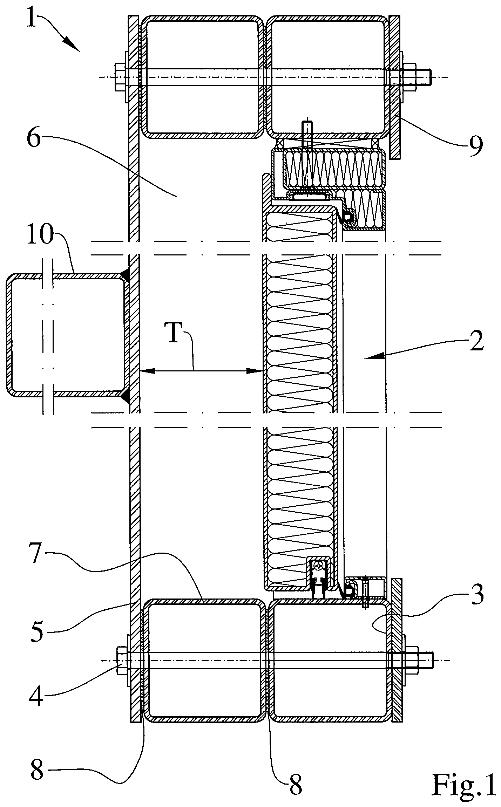

In der Figur 1 ist ein Vertikalschnitt durch eine Druckkammer 6 einer erfindungsgemäßen Vorrichtung 1 zum Testen des Widerstandes eines als Stahlsicherheitstür 14 ausgebildeten Bauelements 2 gegen eine Druckeinwirkung gezeigt. Die Vorrichtung 1 umfasst einen Halterahmen 3, der aus vier Rahmenschenkeln jeweils in Form eines Vierkantrohres zusammengesetzt ist. Die Stahlsicherheitstür 14 ist mit ankerartigen Befestigungsmitteln, auf die hier nicht im Einzelnen eingegangen wird, umlaufend an dem Halterahmen 3 befestigt. Der Halterahmen 3 ist mittels über seinen Umfang verteilter Schrauben 4 mit einer Wand 5 verbunden, die in einem Abstand parallel zu dem Halterahmen 3 angeordnet ist, wobei zur Schaffung einer fluiddichten Druckkammer 6 zwischen der Wand 5 und dem Halterahmen 3 ein Kammerrahmen 7 angeordnet ist, der fluchtend zu dem Halterahmen 3 positioniert ist und ferner analog zu dem Halterahmen 3 aufgebaut ist. Zwischen der Wand 5 und dem Kammerrahmen 7 sowie zwischen dem Kammerrahmen 7 und dem Halterahmen 3 sind jeweils umlaufend Dichtstreifen 8 in einer Stärke von 3 mm vorgesehen. Bei der Figur 1 ergibt sich auf diese Weise eine Druckkammer 6, die bei eingebauter Stahlsicherheitstür 14 etwa eine Tiefe T entsprechend der Tiefe des Kammerrahmens 7 von 120 mm besitzt.

Aus Gründen einer höheren Steifigkeit ist auf der dem Kammerrahmen 7 abgewandten Seite des Halterahmens 3 umlaufend ein Flachprofil 9 vorgesehen, das nach außen hin mit dem Halterahmen 3 fluchtet und nach innen hin über den Halterahmen 3 vorsteht und im Versagensfall der Befestigungsmittel ein Wegschleudern des Bauelements 2 aus dessen Halterahmen 3 verhindern würde.

Die die Rückwand der Druckkammer 6 bildende Wand 5, die von einer 10 mm starken Stahlplatte gebildet wird, ist auf ihrer der Druckkammer 6 abgewandten Seite hin mit sich horizontal über die Breite der Vorrichtung 1 erstreckenden Profilen 10 verstärkt, die aus Stahlrohr-Profilen gebildet werden, wobei übereinander verlaufende Profile 10 einen lichten Abstand von 120 mm zueinander aufweisen. Die Profile 10 sind randseitig über ihre gesamte Länge mit der Rückseite der Wand 5 verschweißt.

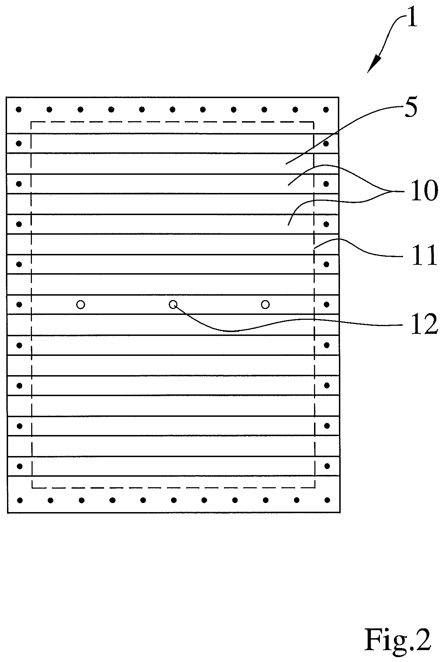

Aus der Figur 2 geht eine Rückansicht der Druckkammer 6 gemäß Figur 1 hervor, in der die Wand 5 mit den horizontal verlaufenden Profilen 10 sowie die Verschraubung der Wand 5 mit dem Kammerrahmen 7, dem Halterahmen 3 und dem Flachprofil 9 erkennbar sind. Eine gestrichelte Linie 11 stellt die jeweils innenseitigen Umrisslinien der Rahmenschenkel dar.

Auf mittlerer Höhe der Vorrichtung 1 sind drei zueinander beabstandete Anschweißnippel 12 angeordnet, an die jeweils eine nicht dargestellte Verbindungsleitung zu einem gleichfalls nicht dargestelltem Druckbehälter angeschlossen wird, um die Druckkammer 6 mit dem zur Durchführung des Tests vorgesehenen Druck zu versorgen. Bei den Verbindungsleitungen kann es sich um Rohrleitungen und/oder Schläuche handeln, die entweder jeweils von dem Druckbehälter gespeist werden, oder aber zunächst zu einer Versorgungsleitung zusammen geführt werden, wobei die Versorgungsleitung zu dem Druckbehälter führt, die in diesem Fall ein einziges Absperrelement enthält.

Je nach Art der Rohrleitungsführung besitzen entweder alle Verbindungsleitungen oder die Versorgungsleitung ein nicht in der Figur dargestelltes Absperrelement, beispielsweise in Form eines Kugelhahns, mittels dem die Versorgung der Druckkammer 6 mit Druck initiiert, gestoppt oder wieder initiiert werden kann. Vor der Durchführung eines Test wird beispielsweise über einen nicht dargestellten Kompressor Druck im Druckbehälter erzeugt und nach Erreichen des erforderlichen Drucks das Absperrelement oder die Absperrelemente geöffnet, so dass in der Druckkammer die Druckwelle einer Explosion simuliert wird.

Neben den drei Anschweißnippeln 12 verfügt die Druckkammer 6 ferner über ein nicht dargestelltes Entlastungsventil, das vorzugsweise ebenfalls in der Wand 5 der Vorrichtung 1 angeordnet ist und über das der Druck in der Druckkammer 6 teilweise oder gänzlich abgelassen werden kann. Eine solche Entlastung ist nötig, um die Zeitdauer der Druckeinwirkung auf das zu prüfende Bauelement zu begrenzen.

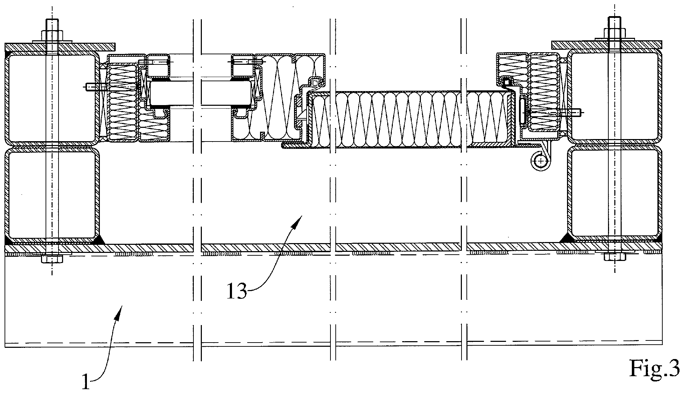

Die Figur 3 zeigt einen Horizontalschnitt durch die Druckkammer 6 gemäß Figur 1, wobei zu erkennen ist, dass die zu testende Stahlsicherheitstür 14 mit einem Seitenteil ausgestattet ist, das aufgrund der Schnittführung in dem Vertikalschnitt gemäß Figur 1 nicht dargestellt wurde. Hierbei ist der Kammerrahmen 7 mit der Wand 5 verschweißt.

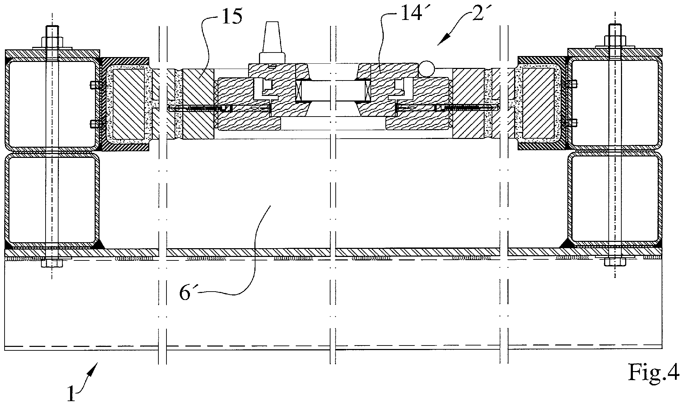

Aus der Figur 4 geht ein Horizontalschnitt durch eine alternative Druckkammer 6' gemäß der vorliegenden Erfindung hervor, die sich lediglich dadurch von der Druckkammer 6 gemäß Figur 1 unterscheidet, dass es sich bei dem zu testenden Bauelement 2' um ein Holzfenster 14' mit einem diese umgebenden Mauerwerk 15 sowie Verbindungsmittel zwischen dem Holzfenster 14' und dem Mauerwerk 15 handelt.

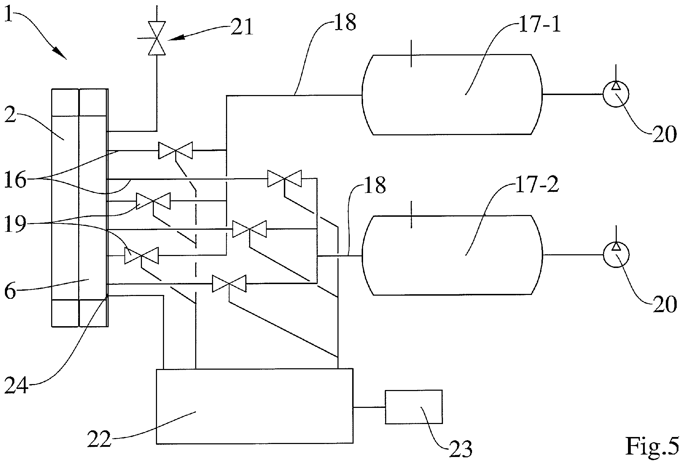

Schließlich zeigt die Figur 5 einen Pneumatik-Schaltplan eines Versuchsaufbaus, beispielsweise mit einer Druckkammer gemäß Figur 1, wobei die Verbindungsleitungen 16 von der Druckkammer 6 zu einem beziehungsweise zu zwei Druckbehältern 17-1, 17-2 schematisch dargestellt sind. Ausgehend von den beiden Druckbehältern 17-1, 17-2 führt jeweils eine Versorgungsleitung 18 über jeweils drei Verbindungsleitungen 16 in die Druckkammer 6, wobei alle insgesamt 6 Verbindungsleitungen jeweils mit einem Absperrelement 19 ausgestattet sind. Alternativ ist es auch möglich, dass die beiden Versorgungsleitungen jeweils mit einem Absperrelement ausgestattet sind, so dass die Anforderungen an die Exaktheit einer simultanen Betätigung der in den Verbindungsleitungen 16 befindlichen Absperrelemente 19 reduziert werden können, allerdings ein einziges größeres und damit aufwendigeres Absperrelement verwendet werden muss.

Die Druckbehälter 17-1, 17-2 werden jeweils von einem Kompressor 20 (oder alternativ von einem einzigen gemeinsamen Kompressor) mit Druckluft gespeist, wobei die Absperrelemente 19 so lange in einer Sperrstellung verbleiben, bis ein ausreichender Druck in einem oder beiden Druckbehältern 17-1, 17-2 erreicht ist. Für das Testen des Bauelements 2 kann entweder die Druckluft eines Druckbehälters 17-1 oder 17-2 verwendet werden, oder aber gleichzeitig die Druckluft der beiden Druckbehälter 17-1, 17-2. Ein alternativer Test des Bauelements 2 kann auch vorsehen, dass das Bauelement 2 zunächst mit der Druckluft eines Druckbehälters 17-1 und nach einer Entlastung der Druckkammer 6 über ein Entlastungsventil 21 mit der Druckluft des zweiten Druckbehälters 17-2 beaufschlagt wird, um eine zweite zeitlich versetzt auftreffende Druckwelle zu simulieren.

Die Steuerung der Absperrelemente 19 und des Entlastungsventils erfolgt über eine Steuereinrichtung 22, die über einen Computer 23 bedient beziehungsweise programmiert werden kann.

Zur Überprüfung des Drucks in der Druckkammer 6, ist letztgenannte mit mindestens einem Drucksensor 24 ausgestattet, dessen aufgezeichnete Daten zu Kontrollzwecken von der Steuereinheit 22 erfasst werden. In dem Computer 23 lassen sich die Steuerzeiten für verschiedene Testprozeduren abspeichern, die sich hinsichtlich des Maximaldrucks, des Druckgradienten in der Anschwell- und Abschwellphase, des Impulses, der Einwirkungsdauer sowie der Nutzung der Druckbehälter unterscheiden können. Bei entsprechender Einstellung der vorgenannten Parameter ist es somit möglich, eine Erdbebensimulation durchzuführen, bei der leichte bis schwere Druckbelastungen immer wiederkehrend über einen längeren Zeitraum auftreten. Auch können bei entsprechender Einstellung der Parameter Unfälle in Raffinerien simuliert werden, deren Belastung sich durch einen langsamen Druckaufbau (geringer Gradient) mit geringem Spitzendruck und eine lange Einwirkzeit auszeichnet.

### In den Figuren sind:

- 1: Vorrichtung
- 2, 2': Bauelement
- 3: Halterahmen
- 4: Schraube
- 5: Wand
- 6, 6': Druckkammer
- 7: Kammerrahmen
- 8: Dichtstreifen
- 9: Flachprofil
- 10: Profil
- 11: gestrichelte Linie
- 12: Anschweißnippel
- 13: Seitenteil
- 14: Stahlsicherheitstür
- 14': Holzfenster
- 15: Mauerwerk
- 16: Verbindungsleitung
- 17-1, 17-2: Druckbehälter
- 18: Versorgungsleitung
- 19: Absperrelement
- 20: Kompressor
- 21: Entlastungsventil
- 22: Steuereinrichtung
- 23: Computer
- 24: Drucksensor

- T: Tiefe

## Patentansprüche

1. Verfahren zum Testen eines flächigen Bauelements (2, 2') bezüglich Beständigkeit gegenüber Explosionsdruck oder Erdbebeneinwirkung zum Simulieren von Stoßwellen mit geringem Impuls mit den folgenden Verfahrensschritten:
a) Das Bauelement (2, 2') wird in kraftübertragender, druckdichter Weise in einem Halterahmen (3) eingebaut.
b) Der mit dem Bauelement (2, 2') versehene Halterahmen (3) wird so an einer Wand (5) montiert, dass zwischen Rahmenschenkeln des Halterahmens (3), dem Bauelement (2, 2') und der Wand (5) eine gegenüber der Umgebung druckdicht abgeschlossene Druckkammer (6, 6') gebildet wird.
c) Mindestens ein Druckbehälter (17-1, 17-2) wird mit einem kompressiblen Fluid gefüllt, bis in dem Druckbehälter (17-1, 17-2) ein Druck p_{B} herrscht, der größer als ein Umgebungsdruck p_{U} ist.
d) Mindestens ein Absperrelement (19) einer Absperreinrichtung wird von einer Sperrstellung in eine Öffnungsstellung überführt, wodurch ein freier Verbindungsquerschnitt von dem Druckbehälter (17-1, 17-2) zu der Druckkammer (6, 6') geschaffen wird.
e) Die Überführung des Absperrelements (19) der Absperreinrichtung von der Schließstellung in die Öffnungsstellung erfolgt zerstörungsfrei und reversibel, wobei die Absperreinrichtung in mindestens einer Verbindungsleitung (16) zwischen der Druckkammer (6, 6') und dem Druckbehälter (17-1, 17-2) angeordnet ist,
**gekennzeichnet durch** den folgenden Verfahrensschritt:
f) ein die Druckkammer (6, 6') mit der Umgebung verbindendes Entlastungsventil (21) wird geöffnet, nachdem das Absperrelement (19) der Absperreinrichtung in die Schließstellung überführt wurde.

2. Verfahren nach Anspruch 1, **dadurch gekennzeichnet, dass** das Absperrelement (19) von der Öffnungsstellung in die Schließstellung überführt wird, bevor zwischen der Druckkammer (6, 6') und dem Druckbehälter (17-1, 17-2) ein Druckausgleich stattgefunden hat oder bevor der Druck in der Druckkammer (6, 6') wieder zu sinken beginnt.

3. Verfahren nach einem der Ansprüche 1 oder 2, **dadurch gekennzeichnet, dass** das Absperrelement (19) im Anschluss an eine Schließbewegung wieder eine Öffnungsbewegung vollführt, vorzugsweise nachdem es zuvor in die Schließstellung überführt worden war.

4. Vorrichtung (1) zum Testen eines flächigen Bauelements (2, 2') bezüglich Beständigkeit gegenüber einer Explosionsdruck oder Erdbebeneinwirkung zum Simulieren von Stoßwellen mit geringem Impuls umfassend
a) einen Halterahmen (3), in dem das Bauelement (2, 2') in kraftübertragender, druckdichter Weise befestigbar ist,
b) eine Wand (5), an der der Halterahmen (3) so montierbar ist, dass zwischen Rahmenschenkeln des Halterahmens (3), dem Bauelement (2, 2') und der Wand (5) eine gegenüber der Umgebung druckdicht abgeschlossene Druckkammer (6, 6') gebildet ist,
c) einen Druckbehälter (17-1, 17-2), der mit einem kompressiblen Medium bis zu einem Druck p_{B}, der größer als der Umgebungsdruck p_{U} befüllbar ist,
d) mindestens eine Verbindungsleitung (16), die von dem Druckbehälter (17-1, 17-2) zu der Druckkammer (6, 6') führt und
e) eine ein Absperrelement (19) aufweisende Absperreinrichtung, die in einer Schließstellung des Absperrelements (19) den Druckbehälter (17-1, 17-2) und die Druckkammer (6, 6') druckmäßig voneinander trennt und in einer Öffnungsstellung des Absperrelements (19) einen Verbindungsquerschnitt freigibt,
f) das Absperrelement (19) zerstörungsfrei von der Schließstellung in die Öffnungsstellung und umgekehrt überführbar ist und die Absperreinrichtung in der mindestens einen Verbindungsleitung (16) angeordnet ist,
**dadurch gekennzeichnet, dass**
g) die Druckkammer (6, 6') ein mit der Umgebung verbindendes Entlastungsventil (21) besitzt, das ausgelegt ist um den Druck in der Druckkammer (6, 6') teilweise oder gänzlich abzulassen nachdem das Absperrelement (19) der Absperreinrichtung in die Schließstellung überführt wurde.

5. Vorrichtung nach Anspruch 4, **dadurch gekennzeichnet, dass** die Absperreinrichtung eine Pneumatikarmatur, insbesondere ein Kugelhahn, ist.

6. Vorrichtung nach Anspruch 4 oder 5, **gekennzeichnet durch** einen vorzugsweise pneumatischen Stellantrieb, mit dem die Absperreinrichtung betätigbar ist.

7. Vorrichtung nach einem der Ansprüche 4 bis 6, **dadurch gekennzeichnet, das**s die Verbindungsleitung (16) zumindest abschnittsweise von einem Schlauch gebildet ist.

8. Vorrichtung nach einem der Ansprüche 4 bis 7, **dadurch gekennzeichnet, dass** mehrere parallel zueinander verschaltete Verbindungsleitungen (16) mit jeweils einer Absperreinrichtung versehen sind.

9. Vorrichtung nach einem der Ansprüche 4 bis7, **dadurch gekennzeichnet, das**s mehrere, parallel zueinander verschaltete und jeweils in die Druckkammer (6, 6') mündende Verbindungsleitungen (16) mit einer gemeinsamen, von dem Druckbehälter ausgehenden Versorgungsleitung (18) verbunden sind, in der die Absperreinrichtung abgeordnet ist.

10. Vorrichtung nach einem der Ansprüche 4 bis 9, **dadurch gekennzeichnet, das**s Mündungsquerschnitte der Verbindungsleitungen (16) jeweils einen Abstand voneinander aufweisen, der mindestens 15 %, vorzugsweise mindestens 20 % eines größten Druckkammermaßes beträgt.

11. Vorrichtung nach einem der Ansprüche 4 bis 10, **dadurch gekennzeichnet, dass** eine senkrecht zu der Wand (5) gemessene Tiefe (T) der Druckkammer (6, 6') mindestens 10 mm, vorzugsweise mindestens 30 mm, weiter vorzugsweise mindestens 60 mm, noch weiter vorzugsweise mindestens 120 mm pro m² Fläche einer parallel zu der Wand (5) ausgerichteten Druckkammerfläche beträgt.

12. Vorrichtung nach einem der Ansprüche 4 bis 11, **dadurch gekennzeichnet, dass** der Querschnitt der Verbindungsleitung (16) oder die Summe der Querschnitte der Verbindungsleitungen (16) kleiner als 20 %, vorzugsweise kleiner als 15 %, weiter vorzugsweise kleiner als 10 %, noch weiter vorzugsweise kleiner als 5 %, noch weiter vorzugsweise kleiner als 3 % einer parallel zu der Wand (5) ausgerichteten Fläche der Druckkammer (6, 6') ist.

13. Vorrichtung nach einem der Ansprüche 4 bis 12, **dadurch gekennzeichnet, dass** die Wand (5) aus einer der Druckkammer (6, 6') zugewandten Platte und diese auf ihrer der Druckkammer (6, 6') abgewandten Seite verstärkenden und mit der Platte verbundenen Profile (10) zusammengesetzt ist, die einen lichten Abstand zueinander von maximal 200 mm, vorzugsweise maximal 100 mm, aufweisen.

14. Vorrichtung nach einem der Ansprüche 4 bis 13, **dadurch gekennzeichnet, dass** die Rahmenschenkel des Halterahmens (3) aus einem als Rechteck-, U- oder Doppel-T-Profil ausgebildeten Grundprofil und einem auf der der Druckkammer (6, 6') abgewandten Seite angeordneten, vorzugsweise als Flachprofil (9) ausgebildeten Einspannprofil zusammengesetzt ist, wobei das Einspannprofil vorzugsweise über das Grundprofil in Richtung einer durch den Halterahmen (3) definierten Öffnung vorsteht und das Bauelement (2) abstützt.

15. Vorrichtung nach einem der Ansprüche 4 bis 14, **gekennzeichnet durch** zwei Druckbehälter (17-1, 17-2), die über jeweils eine zugeordnete Absperreinrichtung entweder gleichzeitig oder zeitlich versetzt zur Druckbeaufschlagung der Druckkammer (6, 6') dienen.

16. Vorrichtung nach einem der Ansprüche 4 bis 15, **dadurch gekennzeichnet, dass** die Länge der mindestens einen Verbindungsleitung (16) zwischen 1 m und 10 m, vorzugsweise zwischen 2 m und 5 m beträgt.

## Claims

1. A method for testing a sheet-like building element (2, 2') with regard to resistance to explosion pressure or earthquake effects for simulating shockwaves with a small impetus using the following method steps:
a) the building element (2, 2') is installed in a holding frame (3) in a force-transferring, pressure-tight manner,
b) the holding frame (3) provided with the building element (2, 2') is assembled on a wall (5) in such a way that a pressure chamber (6, 6') sealed pressure-tight with respect to the surroundings is formed between the frame sides of the holding frame (3), the building element (2, 2') and the wall (5),
c) at least one pressure vessel (17-1, 17-2) is filled with a compressible fluid, until a pressure p_{B} prevails in the pressure vessel (17-1, 17-2) which is greater than a surrounding pressure p_{U},
d) at least one shut-off element (19) of a shut-off device is transferred from a shut-off position into an open position, as result of which a free connecting cross-section from the pressure vessel (17-1, 17-2) to the pressure chamber (6, 6') is created.
e) the transfer of the shut-off element (19) of the shut-off device from the closed position into the open position takes place non-destructively and reversibly, wherein the shut-off device is arranged in at least one connecting line (16) between the pressure chamber (6, 6') and the pressure vessel (17-1, 17-2),
**characterised by** the following method step:
f) a relief valve (21) connecting the pressure chamber (6, 6') to the surroundings is opened after the shut-off element (19) of the shut-off device has been transferred into the closed position.

2. The method according to claim 1, **characterised in that** the shut-off element (19) is transferred from the open position into the closed position before a pressure equalisation has taken place between the pressure chamber (6, 6') and the pressure vessel (17-1, 17-2) or before the pressure in the pressure chamber (6, 6') starts to fall again.

3. The method according to any one of claims 1 or 2, **characterised in that** the shut-off element (19) performs an opening movement again following a closing movement, preferably after it has previously been transferred into the closed position.

4. A device (1) for testing a sheet-like building element (2, 2') with regard to resistance to explosion pressure or earthquake effects for simulating shockwaves with a small impetus comprising
a) a holding frame (3) in which the building element (2, 2') can be fixed in a force-transferring, pressure-tight manner,
b) a wall (5), on which the holding frame (3) can be assembled in such a way that a pressure chamber (6, 6') sealed pressure-tight with respect to the surroundings is formed between the frame sides of the holding frame (3), the building element (2, 2') and the wall (5),
c) a pressure vessel (17-1, 17-2), which can be filled with a compressible medium up to a pressure p_{B} which is greater than the surrounding pressure p_{U},
d) at least one connecting line (16), which leads from the pressure vessel (17-1, 17-2) to the pressure chamber (6, 6') and
e) a shut-off device comprising a shut-off element (19) which, in a closed position of the shut-off element (19), separates the pressure vessel (17-1, 17-2) and the pressure chamber (6, 6') from one another in terms of pressure and, in an open position of the shut-off element (19), frees a connecting cross-section,
f) the shut-off element (19) can be transferred from the closed position into the open position and vice versa and the shut-off device is arranged in the at least one connecting line (16),
**characterised in that**
g) the pressure chamber (6, 6') comprises a relief valve (21) connecting to the surroundings, which is designed to partially or completely relieve the pressure in the pressure chamber (6, 6') after the shut-off element (19) of the shut-off device has been is transferred into the closed position.

5. The device according to claim 4, **characterised in that** the shut-off device is a pneumatic fitting, in particular a ball valve.

6. The device according to claim 4 or 5, **characterised by** a preferably pneumatic actuating drive with which the shut-off device can be actuated.

7. The device according to any one of claims 4 to 6, **characterised in that** the connecting line (16) is formed at least in sections by a hose.

8. The device according to any one of claims 4 to 7, **characterised in that** a plurality of connecting lines (16) connected in parallel with one another are each provided with a shut-off device.

9. The device according to any one of claims 4 to 7, **characterised in that** a plurality of connecting lines (16) connected in parallel with one another and each emerging into the pressure chamber (6, 6') are connected to a common supply line (18) proceeding from the pressure vessel, in which supply line the shut-off device is arranged.

10. The device according to any one of claims 4 to 9, **characterised in that** mouth cross-sections of the connecting lines (16) each have a spacing from one another, which amounts to at least 15 %, preferably at least 20 % of a maximum pressure chamber dimension.

11. The device according to any one of claims 4 to 10, **characterised in that** a depth (T) of the pressure chamber (6, 6') measured perpendicular to the wall (5) amounts to at least 10 mm, preferably at least 30 mm, more preferably at least 60 mm, still more preferably at least 120 mm per m² area of a pressure chamber surface aligned parallel with the wall (5).

12. The device according to any one of claims 4 to 11, **characterised in that** the cross-section of the connecting line (16) or the sum of the cross-sections of the connecting lines (16) is less than 20 %, preferably less than 15 %, more preferably less than 10 %, still more preferably less than 5 %, still more preferably less than 3 % of a surface of the pressure chamber (6, 6') aligned parallel with the wall (5).

13. The device according to any one of claims 4 to 12, **characterised in that** the wall (5) consists of a plate facing the pressure chamber (6, 6') and profiles (10) reinforcing the latter on its side facing away from the pressure chamber (6, 6') and connected to the plate, said profiles having a clear spacing from one another of at most 200 mm, preferably at most 100 mm.

14. The device according to any one of claims 4 to 13, **characterised in that** the frame side of the holding frame (3) consists of a basic profile constituted as a rectangular, U-shaped or double-T-shaped profile and a clamping profile arranged on the side facing away from the pressure chamber (6, 6') and preferably constituted as a flat profile (9), wherein the clamping profile projects over the basic profile in the direction of an opening defined by the holding frame (3) and supports the building element (2).

15. The device according to any one of claims 4 to 14, **characterised by** two pressure vessels (17-1, 17-2) which, by means of an assigned shut-off device in each case, are used either simultaneously or with a time lag for the exposure of the pressure chamber (6, 6') to pressure.

16. The device according to any one of claims 4 to 15, **characterised in that** the length of the at least one connecting line (16) amounts to between 1 m and 10 m, preferably between 2 m and 5 m.

## Revendications

1. Procédé destiné à tester un élément de construction (2, 2') plan au niveau de la résistance à la pression d'explosion ou à l'effet d'un tremblement de terre, pour simuler des ondes de choc à faible impulsion, comportant les étapes de procédé suivantes :
a) on encastre l'élément de construction (2, 2') de manière à transmettre la force, à conserver la pression dans un cadre de maintien (3),
b) on monte le cadre de maintien (3) muni de l'élément de construction (2, 2') sur une paroi (5), de sorte à créer entre les branches de câble du câble de maintien (3), l'élément de construction (2, 2') et la paroi (5) une chambre de pression (6, 6') close par rapport à l'environnement, en conservant la pression,
c) on remplit au moins un réservoir sous pression (17-1, 17-2) d'un fluide compressible, jusqu'à ce qu'il règne dans le réservoir sous pression (17-1, 17-2) une pression p_{B} qui est supérieure à une pression environnante p_{U},
d) on fait passer au moins un élément de blocage (19) d'un système de blocage d'une position de fermeture dans une position d'ouverture, ce qui a pour effet de créer une section transversale de liaison libre du réservoir sous pression (17-1 17-2) vers la chambre de pression (6, 6'),
e) le passage de l'élément de blocage (19) de la position de fermeture dans la position d'ouverture s'effectue de manière non destructive et de manière réversible, le système de blocage étant placé dans au moins un conduit de liaison (16) entre la chambre de pression (6, 6') et le réservoir sous pression (17-1, 17-2),
**caractérisé par** l'étape de procédé suivante :
f) on ouvre une soupape de décharge (21) reliant la chambre de pression (6, 6') avec l'environnement, après avoir passé l'élément de blocage (19) du système de blocage dans la position de fermeture.

2. Procédé selon la revendication 1, **caractérisé en ce qu'**on fait passer l'élément de blocage (19) de la position d'ouverture dans la position de fermeture, avant qu'une compensation de pression n'ait eu lieu entre la chambre de pression (6, 6') et le réservoir sous pression (17-1, 17-2) ou avant que la pression dans la chambre de pression (6, 6`) ne recommence à chuter.

3. Procédé selon l'une quelconque des revendications 1 ou 2, **caractérisé en ce que** suite à un mouvement de fermeture, l'élément de blocage (19) accomplit de nouveau un mouvement d'ouverture, de préférence après avoir été précédemment passé dans la position de fermeture.

4. Dispositif (1) destiné à tester un élément de construction (2, 2') plan au niveau de la résistance à la pression d'explosion ou à l'effet d'un tremblement de terre, pour simuler des ondes de choc à faible impulsion, comprenant
a) un cadre de maintien (3) dans lequel l'élément de construction (2, 2') peut être fixé de manière à transmettre la force, à conserver la pression,
b) une paroi (5) sur laquelle on peut monter le cadre de maintien (3) de sorte qu'entre des branches de cadre du cadre de maintien (3), l'élément de construction (2, 2') et la paroi (5) soit créée une chambre de pression (6, 6') close de manière à conserver la pression par rapport à l'environnement,
c) un réservoir sous pression (17-1, 17-2) qui peut être rempli d'un milieu compressible jusqu'à une pression p_{B} qui est supérieure à la pression environnante p_{U},
d) au moins un conduit de liaison (16) qui mène du réservoir sous pression (17-1, 17-2) vers la chambre de pression (6, 6') et
e) un système de blocage comportant un élément de blocage (19), qui dans une position de fermeture de l'élément de blocage (19) sépare l'un de l'autre le réservoir sous pression (17-1, 17-2) et la chambre de pression (6, 6') au niveau de la pression et dans une position d'ouverture de l'élément de blocage (19), libère une section transversale de liaison,
f) l'élément de blocage (19) peut être amené de manière non destructive de la position de fermeture dans la position d'ouverture et inversement et le système de blocage est placé dans l'au moins un conduit de liaison (16),
**caractérisé en ce que**
g) le chambre de pression (6, 6') dispose d'une soupape de décharge (21) reliant avec l'environnement, qui est conçue pour relâcher en partie ou totalement la pression dans la chambre de pression (6, 6') après que l'élément de blocage (19) du système de blocage ait été passé dans la position de fermeture.

5. Dispositif selon la revendication 4, **caractérisé en ce que** le système de blocage est une robinetterie pneumatique, notamment un robinet à boisseau sphérique.

6. Dispositif selon la revendication 4 ou 5, **caractérisé par** un servomoteur de préférence pneumatique, à l'aide duquel le système de blocage peut être actionné.

7. Dispositif selon l'une quelconque des revendications 4 à 6, **caractérisé en ce que** le conduit de liaison (16) est formé au moins par tronçons par un flexible.

8. Dispositif selon l'une quelconque des revendications 4 à 7, **caractérisé en ce que** plusieurs conduits de liaison (16) montés en parallèle les uns par rapport aux autres sont munis chacun d'un système de blocage.

9. Dispositif selon l'une quelconque des revendications 4 à 7, **caractérisé en ce que** plusieurs conduits de liaison (16) montés en parallèle et débouchant chacun dans la chambre de pression (6, 6') sont reliés par un conduit d'alimentation (18) commun, partant du réservoir sous pression, dans lequel est placé le système de blocage.

10. Dispositif selon l'une quelconque des revendications 4 à 9, **caractérisé en ce que** des sections transversales d'embouchure présentent respectivement un écart mutuel qui s'élève à au moins 15 %, de préférence au moins 20 % d'une taille maximale de la chambre de pression.

11. Dispositif selon l'une quelconque des revendications 4 à 10, **caractérisé en ce qu'**une profondeur (T) mesurée à la perpendiculaire de la paroi (5) de la chambre de pression (6, 6') s'élève à au moins 10 mm, de préférence à au moins 30 mm, de manière encore plus préférée à au moins 60 mm, de manière encore plus préférée à au moins 120 mm par m² de surface d'une surface de la chambre de pression orientée à la parallèle de la paroi (5).

12. Dispositif selon l'une quelconque des revendications 4 à 11, **caractérisé en ce que** la section transversale du conduit de liaison (16) ou la somme des sections transversales des conduits de liaison (16) est inférieure à 20 %, de préférence inférieure à 15 %, de manière plus préférée, inférieure à 10 %, de manière encore plus préférée, inférieure à 5 %, de manière vraiment plus préférée, inférieure à 3 % d'une surface de la chambre de pression (6, 6') qui est orientée à la parallèle de la paroi (5).

13. Dispositif selon l'une quelconque des revendications 4 à 12, **caractérisé en ce que** la paroi (5) est composée d'une plaque faisant face à la chambre de pression (6, 6') et de profilés (10) renforçant cette dernière sur le côté opposé à la chambre de pression (6, 6') et reliés avec la plaque, qui présentent un dégagement mutuel d'un maximum de 200 mm, de préférence d'un maximum de 100 mm.

14. Dispositif selon l'une quelconque des revendications 4 à 13, **caractérisé en ce que** les branches de cadre du cadre de maintien (3) sont composées d'un profilé de base conçu en un profilé rectangulaire, en forme de U, ou de double T et d'un profilé de serrage placé sur le côté opposé à la chambre de pression (6, 6'), conçu de préférence en tant que profilé plat (9), le profilé de serrage débordant de préférence du profilé de base dans la direction d'un orifice défini par le cadre de maintien (3) et soutenant l'élément de construction (2).

15. Dispositif selon l'une quelconque des revendications 4 à 14, **caractérisé en ce que** deux réservoirs sous pression (17-1, 17-2) qui par l'intermédiaire de chaque fois un système de blocage associé sont destinés à servir soit simultanément ou de manière décalée dans le temps à appliquer une pression sur la chambre de pression (6, 6').

16. Dispositif selon l'une quelconque des revendications 4 à 15, **caractérisé en ce que** le longueur de l'au moins un conduit de liaison (16) est comprise entre 1 m et 10 m, de préférence entre 2 m et 5 m.
